# FASCICULE DE BREVET EUROPEEN

(11) **EP 3 529 312 B1**
(45) Date de publication et mention de la délivrance du brevet: **26.06.2024**
(21) Numéro de dépôt: 17797675.0
(22) Date de dépôt: 18.10.2017
(51) Int. Cl.: C08L 77/06

(54) **UTILISATION D'UN POLYAMIDE SEMI-AROMATIQUE DANS UN MÉLANGE DE POLYAMIDE ALIPHATIQUE COMPRENANT DES FIBRES DE VERRE À SECTION CIRCULAIRE POUR LIMITER LE GAUCHISSEMENT**
VERWENDUNG EINES HALBAROMATISCHES POLYAMIDS IN EINER ALIPHATISCHEN POLYAMIDMISCHUNG MIT GLASFASERN MIT EINEM KREISFÖRMIGEN QUERSCHNITT ZUR BEGRENZUNG DER VERZERRUNG
USE OF A SEMI-AROMATIC POLYAMIDE IN AN ALIPHATIC POLYAMIDE MIXTURE COMPRISING GLASS FIBRES WITH A CIRCULAR CROSS-SECTION FOR LIMITING WARPING

(30) Priorité: 19.10.2016 FR 1660125; 23.03.2017 FR 1752406
(43) Date de publication de la demande: 28.08.2019
(73) Titulaire: Arkema France, 92700 Colombes (FR)
(72) Inventeur: BRULE, Benoît, 27170 Beaumont-Le-Roger (FR); BREUIL, Antoine, Tokyo-to 112-0003 (JP); WANG, Hao, Jiangsu 215522 (CN); YAO, Xiong, Jiangsu 215522 (CN)
(74) Mandataire: Arkema Patent
(86) Numéro de dépôt international: PCT/FR2017/052866
(87) Numéro de publication internationale: WO 2018/073536

(56) Documents cités:
- EP-A1- 2 792 714
- WO-A1-2014/195226

## Description

La présente invention concerne l'utilisation d'un polyamide semi-aromatique, en particulier un polyamide MXDZ dans un mélange de polyamide aliphatique, notamment semi-cristallin, comprenant des fibres de verre à section circulaire, pour limiter le gauchissement de la composition obtenue.

De nombreuses applications dans le domaine E/E demandent des matériaux très rigides (coque de téléphone, pièce ordinateur...). La rigidité est d'autant plus importante que la tendance marché va vers une diminution du poids des équipements électroniques et donc vers une réduction des épaisseurs des pièces.

Toutefois, la réalisation de pièces de faible épaisseur amène d'autres problématiques : aptitude à être injectées, en particulier matériaux suffisamment fluides pour remplir complètement le moule et surtout respect de la stabilité des pièces (absence de gauchissement : problématique majeure avec ces matériaux rigides obtenus par addition des fibres de verre).

Dans ces applications, les polyamides (PA) rigides (module > 12GPa) trouvent une grande place. Mais dès lors que le taux de fibres est supérieur à 30%, l'utilisation de fibres à section transversale non circulaire ou plate (FF) est la solution retenue pour satisfaire l'ensemble du cahier des charges, et en particulier pour ne plus avoir de gauchissement des pièces fines injectées.

Ainsi, la demande EP2789591, au paragraphe [0003], indique que les fibres de verre à section transversale non circulaire permettent d'améliorer les propriétés mécaniques, la précision dimensionnelle et le gauchissement de résines renforcées avec lesdites fibres de verre à section non circulaire. Ceci est dû, selon cette demande, pour ce qui concerne l'amélioration des propriétés mécaniques, au fait que les fibres de verre à section non circulaire ont une surface de contact supérieure à celle des fibres à section circulaire. S'agissant de l'amélioration de la précision dimensionnelle et le gauchissement, ceci est dû, toujours selon la demande EP2789591, au fait que les fibres de verre à section non circulaire s'orientent moins dans le sens de l'écoulement que les fibres de verre à section circulaire et tendent par conséquent à être plus orientées de manière bidimensionnelle que les fibres de verre à section circulaire dans la pièce injectée.

De même, la demande US 2011/0105655 décrit des compositions présentant une faible distorsion lors du moulage et constituées de 25 à 72% en poids d'un polyamide, de 20 à 65% en poids fibres de verre à section plate de ratio L/D de 2 à 8, et de 8 à 25% en poids d'un agent ignifugeant (L représentant la grande dimension de la section transverse de la fibre et D la petite dimension de la section transverse de ladite fibre). Le polyamide utilisé est un mélange de 55-90% en poids d'un polyamide aliphatique et de 10 à 45% en poids d'un autre polyamide qui peut être MXD6 par rapport à la somme totale des polyamides.

Également, la demande US 2010/279111 décrit des compositions présentant aussi une faible distorsion lors du moulage constituées de 30 à 80% en poids d'un polyamide et de 20 à 70% de fibres de verre longues à section plate de ratio L/D de 2 à 8. Le polyamide utilisé est soit un mélange de 55 à 85% en poids d'un polyamide aliphatique et de 15 à 45% en poids d'un polyamide qui peut être MXD6 par rapport à la somme totale des polyamides, soit un mélange de 55 à 85% en poids d'un polyamide aliphatique et de 15 à 45% en poids d'un copolyamide comprenant un ou plusieurs polyamides, par exemple MXDI ou MXD6 et au moins un autre polyamide choisi parmi PA 66, 610, 6 et 12, par rapport à la somme totale des polyamides.

Le brevet JP5523520 décrit quant à lui des granules de polyamide ayant des propriétés électriques et de résistance à la déformation.

Les granules sont constitués de 5-40 parts en poids d'un agent ignifugeant, de 5-200 parts en poids d'une fibre de verre à section plate avec un ratio L/D d'au moins 2,3 et de 0-40 parts en poids d'un polyamide qui peut être un mélange de polyamide aliphatique avec un polyamide semi-aromatique tel que MXD10.

La demande de brevet EP 2 792 714 A1 divulgue une composition comportant du MXD10, du PA66 et des fibres de verre à section circulaire.

La demande de brevet WO 2014/195226 A1 décrit des compositions comprenant un polyamide aliphatique, notamment un PA66, un polyamide obtenu à partir de m-xylylène diamine, et des fibres de verre à section plate.

Néanmoins, l'utilisation de fibres de verre à section plate par rapport aux fibres de verre à section circulaire engendre un surcoût non négligeable. De plus les fournisseurs de fibres de verre à section plate sont beaucoup moins nombreux que les fournisseurs de fibre de verre à section circulaire. Ces deux aspects sont essentiels dans la cadre de la production industrielle de résines renforcées en fibres de verre.

Il est donc nécessaire de pouvoir disposer de compositions utilisant des fibres de verres à section circulaire, permettant ainsi de limiter le coût de ladite composition et de s'assurer d'un approvisionnement pérenne en fibres de verre à section circulaire tout en limitant l'inconvénient de celles-ci, à savoir notamment le gauchissement lors de la mise en oeuvre des compositions.

Ces différents problèmes ont été résolus par un alliage spécifique de MXDZ avec un mélange de polyamide aliphatique et de fibres de verre à section circulaire.

Le terme « alliage » signifie ici un mélange.

Les inventeurs ont en effet trouvé de manière inattendue que l'ajout d'un polyamide MXDZ dans un mélange de polyamide aliphatique, en particulier semi-cristallin comprenant des fibres de verre à section circulaire permettait de limiter le gauchissement de la composition lors de la mise en oeuvre en particulier par injection ou moulage par compression de la composition, gauchissement qui se produit lorsque le mélange et la fibre de verre sont mis en oeuvre sans le polyamide MXDZ.

Un autre avantage des compositions de MXDZ dans un mélange de polyamide aliphatique et de fibres de verre à section circulaire est de présenter des propriétés mécaniques, en particulier d'allongement à la rupture supérieur, notamment de 30%, par rapport à une composition avec des fibres de verre à section plate.

La présente invention concerne donc l'utilisation d'au moins un polyamide MXDZ, obtenu à partir de la polycondensation de la meta-xylylène diamine (MXD), avec un acide dicarboxylique aliphatique (Z) en C₆ à C₁₈, en particulier en C₆ à C₁₂, dans un mélange comprenant au moins un polyamide aliphatique A obtenu à partir de la polycondensation d'un motif choisi parmi :
- un lactame en C₆ à C₁₂,
- un aminoacide en C₆ à C₁₂, et
- un motif XY obtenu à partir de la polycondensation d'une diamine aliphatique (X) en C₄ à C₁₈, en particulier en C₄ à C₁₂, et un acide dicarboxylique aliphatique (Y) en C₆ à C₁₈, en particulier en C₆ à C₁₂,

des fibres de verre à section circulaire et optionnellement au moins un modifiant choc et/ou au moins un additif,
ledit au moins un polyamide MXDZ et ledit mélange constituant une composition, et le rapport en poids MXDZ/A étant compris de 0,11 à 0,83, en particulier de 0,11 à 0,66, pour limiter le gauchissement de ladite composition lors de sa mise en oeuvre, en particulier par injection ou moulage par compression.

L'expression « limiter le gauchissement » signifie que le gauchissement est inférieur à 2mm, en particulier inférieur à 1 mm tel que déterminé sur des plaques de 100*100*1 mm³.

Le gauchissement peut être totalement supprimé mais en règle générale, il est inférieur à 2mm, en particulier inférieur à 1 mm.

La meta-xylylène diamine (MXD, numéro CAS 1477-55-0) peut être utilisée seule ou en mélange avec de la para-xylylène diamine (PXD, numéro CAS 539-48-0), mais dans ce dernier cas, et dans toute la description, la MXD doit être majoritaire par rapport à la PXD.

Avantageusement, la MXD est utilisée seule et la composition est donc dépourvue de PXD.

L'acide dicarboxylique aliphatique (Z) en C₆ à C₁₈ peut être choisi parmi l'acide adipique, l'acide subérique, l'acide azélaïque, l'acide sébacique, l'acide undécanedioïque, l'acide dodécanedioïque, l'acide brassylique, l'acide tétradécanedioïque, l'acide pentadécanedioïque, l'acide hexadécanedioïque, l'acide octadécanedioïque.

Avantageusement, l'acide dicarboxylique aliphatique (Z) est en C₇ à C₁₈ et peut être choisi parmi l'acide subérique, l'acide azélaïque, l'acide sébacique, l'acide undécanedioïque, l'acide dodécanedioïque, l'acide brassylique, l'acide tétradécanedioïque, l'acide pentadécanedioïque, l'acide hexadécanedioïque, l'acide octadécanedioïque.

L'acide dicarboxylique aliphatique (Z) n'est pas un mélange d'acides dicarboxyliques aliphatiques en C₆ à C₁₈, ou C₇ à C₁₈ ci-dessus définis et le MXDZ correspond donc à un homopolyamide.

Néanmoins, MXDZ peut correspondre à un mélange de MXDZ.

Dans le cas où la MXD est en mélange avec la PXD, alors MXDZ correspond donc à un copolyamide MXDZ/PXDZ à condition que la proportion molaire de MXDZ dans le copolyamide soit majoritaire par rapport à celle PXDZ.

Avantageusement, la MXD est dépourvue de PXD et MXDZ est un homopolyamide. Avantageusement, l'acide dicarboxylique aliphatique (Z) en C₆ à C₁₂ peut être choisi parmi l'acide adipique, l'acide subérique, l'acide azélaïque, l'acide sébacique, l'acide undécanedioïque, l'acide dodécanedioïque.

Plus avantageusement, l'acide dicarboxylique aliphatique (Z) en C₇ à C₁₂ peut être choisi parmi l'acide subérique, l'acide azélaïque, l'acide sébacique, l'acide undécanedioïque, l'acide dodécanedioïque.

L'expression « polyamide aliphatique » signifie un homopolyamide, à l'exclusion d'un copolyamide. Il est bien entendu qu'il peut s'agir d'un mélange de polyamides aliphatiques. Le polyamide aliphatique A est donc un homopolyamide.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Lorsque le polyamide aliphatique A est obtenu à partir de la polycondensation d'un lactame ledit lactame peut être choisi parmi la pyrrolidinone, la 2-pipéridinone, le caprolactame, l'énantholactame, le caprylolactame, le pelargolactame, le décanolactame, l'undécanolactame, et le lauryllactame, en particulier le lauryllactame. Lorsque le polyamide aliphatique A est obtenu à partir de la polycondensation d'un aminoacide, il peut être choisi parmi l'acide 9-aminononanoïque, l'acide 10-aminodécanoïque, l'acide 10-aminoundécanoïque, l'acide 12-aminododécanoïque et l'acide 11-aminoundécanoïque ainsi que ses dérivés, notamment l'acide N-heptyl-11-aminoundécanoïque, en particulier l'acide 11-aminoundécanoïque.

Lorsque le polyamide aliphatique A est obtenu à partir de la polycondensation d'un motif XY, la diamine (X) en C₄ à C₁₈ utilisée dans le polyamide XY est une diamine linéaire ou ramifiée, et peut être en particulier choisi parmi la 1,4-butanediamine, 1,5-pentaméthyldiamine, la 2-méthyl-1,5-pentanediamine, la 1,6-hexaméthylènediamine la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine, 1,11-undécanediamine, la 2-butyl-2-éthyl-1,5-pentanediamine, la 1,12-dodécanediamine, la 1,13-tridécanediamine, la 1,14-tétradécanediamine, la 1,16-hexadécanediamine et la 1,18-octadécanediamine. Avantageusement, la diamine (X) utilisée est en C₄ à C₁₂, en particulier choisi parmi la 1,4-butanediamine, 1,5-pentaméthyldiamine, 2-méthyl-1,5-pentanediamine, la 1,6-hexaméthylènediamine la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine, 1,11-undécanediamine, la 2-butyl-2-éthyl-1,5-pentanediamine, la 1,12-dodécanediamine.

Avantageusement, la diamine (X) utilisée est en C₆ à C₁₀, en particulier choisi parmi la 2-méthyl-1,5-pentanediamine, la 1,6-hexaméthylènediamine la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine.

Lorsque le polyamide aliphatique A est obtenu à partir de la polycondensation d'un motif XY (encore appelé polyamide XY), l'acide dicarboxylique aliphatique (Y) en C₆ à C₁₈, en particulier en C₆ à C₁₂, utilisé est tel que défini ci-dessus.

Par fibre de verre au sens de l'invention, on entend toute fibre de verre, notamment telle que décrite par Frederick T. Wallenberger, James C. Watson and Hong Li, PPG industries Inc. (ASM Handbook, Vol 21 : composites (#06781G), 2001 ASM International), à condition que ladite fibre soit à section circulaire.

Avantageusement, lesdites fibres de verre présentent un diamètre compris de 4 µm à moins de 25 µm, de préférence de 4 à 15 µm et un ratio L/D (L représentant la grande dimension de la section transverse de la fibre et D la petite dimension de la section transverse de ladite fibre) inférieur à 2, en particulier inférieur à 1,5.

Avantageusement, le ratio L/D est égal à environ 1.

Par l'expression « modifiant choc », il faut entendre un polymère à base polyoléfine présentant un module de flexion inférieur à 100 MPa mesuré à 23°C selon la norme ISO 178 :2010 et de Tg inférieure à 0°C (mesurée selon la norme 11357-2 au niveau du point d'inflexion du thermogramme DSC), en particulier une polyoléfine, couplée ou non avec un Peba (polyether block amide) ayant un module de flexion < 200 MPa. On ne sortirait pas du cadre de l'invention en utilisant un Peba seul comme modifiant choc dans la composition.

La polyoléfine du modifiant choc peut être fonctionnalisée ou non fonctionnalisée ou être un mélange d'au moins une fonctionnalisée et/ou d'au moins une non fonctionnalisée.

Notamment, une partie ou la totalité des polyoléfines porte une fonction choisie parmi les fonctions acide carboxylique, anhydride carboxylique et époxyde, et est en particulier choisie parmi un copolymère d'éthylène et de propylène à caractère élastomère (EPR), un copolymère éthylène-propylène-diène à caractère élastomère (EPDM) et un copolymère éthylène/(meth)acrylate d'alkyle, un copolymère éthylène-alcène supérieur, en particulier un copolymère éthylène-octène, un terpolymère éthylène-acrylate d'alkyle-anhydride maléique.

Avantageusement, le modifiant choc est choisi parmi le F493^{®}, un Pebax^{®}, en particulier le Pebax^{®} 40R53 SP01, un Lotader^{®}, en particulier le Lotader^{®} 5500 ou le Lotader^{®} 7500, le Exxelor VA1803^{®}, ou un mélange de ceux-ci, dans ce cas ils sont dans un rapport allant de 0,1/99,9 à 99,9/0,1, préférentiellement 1/2 à 2/1 lorsqu'ils sont en mélange de deux.

A titre d'exemple, le modifiant choc est choisi parmi les mélanges suivants : F493^{®}/Lotader^{®}, en particulier F493^{®}/Lotader^{®} 5500 ou F493^{®}/Lotader^{®} 7500.

Le modifiant choc peut également être un modifiant de type « core-shell », également désigné « copolymère de type coeur-écorce ».

Le modifiant de type « core-shell » se présente sous la forme de fines particules ayant un coeur en élastomère et au moins une écorce thermoplastique, la taille des particules est en général inférieure au µm et avantageusement comprise de 150 à 500 nm.

Le modifiant de type « core-shell » possède une base acrylique ou butadiène contrairement au modifiant choc qui possède une base polyoléfine. Avantageusement, la proportion de modifiant choc est comprise de 0 à 10% en poids par rapport au poids total de la composition.

L'utilisation d'au moins un MXDZ dans le mélange comprenant un polyamide aliphatique et des fibres de verre constitue une composition.

Avantageusement, ladite composition est dépourvue d'ignifugeant.

Avantageusement, ladite composition est dépourvue de PA66.

Avantageusement, ladite composition est dépourvue d'ignifugeant et de PA66. Avantageusement, ladite composition est dépourvue de PA6 et de PA66.

Les additifs optionnellement utilisés dans la composition obtenue avec l'utilisation de MXDZ dans un mélange de polyamide aliphatique A et de fibres de verres sont les additifs classiques utilisés dans les polyamides et bien connus de l'homme du métier. Le rapport en poids MXDZ/A dans ladite composition est compris de 0,11 à 0,83, en particulier de 0,11 à 0,66.

Par conséquent, le polyamide semi-aromatique MXDZ est toujours en proportion inférieure au polyamide aliphatique A ou au mélange de polyamides aliphatiques A. Avantageusement, le polyamide aliphatique A est un polyamide semi-cristallin ou un mélange de polyamides semi-cristallins.

L'expression « polyamide semi-cristallin » au sens de l'invention désigne des polyamides qui présentent une température de fusion (Tf) et une enthalpie de fusion ΔH > 10 J/g, en particulier > 12 J/g ainsi qu'une température de transition vitreuse (Tg) tels que déterminés par DSC selon la norme ISO 11357-1 :2009 et ISO 11357-2 et 3 :2013, à une vitesse de chauffe de 20K/min.

Avantageusement, la proportion dudit au moins un polyamide MXDZ utilisé avec ledit mélange est comprise de 5 à 30% en poids, en particulier de 5 à 20% par rapport à la somme des constituants de ladite composition.

Avantageusement, ladite composition constituée par l'utilisation dudit au moins un polyamide MXDZ avec ledit mélange comprend :
- de 5 à 30% en poids, en particulier de 5 à 20, de MXDZ
- de 20 à 60% en poids, en particulier de 25 à 50% dudit au moins un polyamide aliphatique A,
- de 30 à 75% en poids, en particulier de 40 à 65% en poids de fibres de verre à section circulaire,
- de 0 à 10% en poids d'au moins un modifiant choc,
- de 0 à 2% en poids d'au moins un additif.

La somme des proportions de chaque constituant de la composition étant égale à 100%.

Avantageusement, ladite composition constituée ci-dessus est l'une des suivantes (les pourcentages sont indiqués en poids) :

| N° COMPOSITION | MXDZ | Polyamide aliphatique A | Fibres de verre |
|---|---|---|---|
| 1 | 5-30% | 20-60% | 30-75% |
| 2 | 5-30% | 20-60% | 40-65% |
| 3 | 5-30% | 25-50% | 30-75% |
| 4 | 5-30% | 25-50% | 40-65% |
| 5 | 5-20% | 20-60% | 30-75% |
| 6 | 5-20% | 20-60% | 40-65% |
| 7 | 5-20% | 25-50% | 30-75% |
| 8 | 5-20% | 25-50% | 40-65% |

La somme des constituants de chaque composition 1 à 8 est égale à 100%.

Chacune des compositions 1 à 8 ci-dessus peut de plus comprendre au moins un modifiant choc jusqu'à 10% en poids, la somme des constituants étant égale à 100%. Chacune des compositions 1 à 8 ci-dessus peut de plus comprendre un additif jusqu'à 2% en poids, la somme des constituants étant égale à 100%.

Chacune des compositions 1 à 8 ci-dessus peut de plus comprendre au moins un modifiant choc jusqu'à 10% en poids et au moins un additif jusqu'à 2% en poids, la somme des constituants étant égale à 100%.

Avantageusement, le MXDZ utilisé avec ledit mélange ci-dessus défini pour constituer l'une des compositions ci-dessus définies comprend du MXD10.

Le MXD10 est donc en mélange avec au moins un autre MXDZ, Z étant un acide dicarboxylique en C₆ à C₁₈, en particulier en C₇ à C₁₈, tel que ci-dessus défini, notamment en proportion supérieure à 50% en poids par rapport à la somme totale des polyamides MXDZ.

Avantageusement, le MXDZ utilisé avec ledit mélange ci-dessus défini pour constituer l'une des compositions ci-dessus définies est constitué de MXD10 et de MXD6. Avantageusement, le MXDZ utilisé avec ledit mélange ci-dessus défini pour constituer l'une des compositions ci-dessus définies est constitué de MXD10.

Avantageusement, le polyamide aliphatique A comprend un polyamide aliphatique obtenu à partir de la polycondensation d'un motif XY dont l'acide dicarboxylique (Y) est de l'acide sébacique.

Avantageusement, ledit polyamide aliphatique A obtenu à partir de la polycondensation d'un motif XY dont l'acide dicarboxylique (Y) est de l'acide sébacique est en proportion supérieure à 50% en poids par rapport au poids total des polyamides aliphatique A. Avantageusement, ledit polyamide aliphatique A obtenu à partir de la polycondensation d'un motif XY correspond à un seul polyamide dont l'acide dicarboxylique (Y) est de l'acide sébacique.

Avantageusement, le polyamide aliphatique A comprend un polyamide aliphatique obtenu à partir de la polycondensation d'un motif XY dont la diamine (X) est en C₆ à C₁₀.

Le polyamide aliphatique A est donc un mélange d'au moins deux polyamides XY dont la diamine (X) est en C₆ à C₁₀, les diamines étant différentes l'une de l'autre, en particulier.

Avantageusement, ledit polyamide aliphatique A obtenu à partir de la polycondensation d'un motif XY dont la diamine (X) est en C₆ à C₁₀ est en proportion supérieure à 50% en poids par rapport au poids total des polyamides XY.

Avantageusement, ledit polyamide aliphatique A obtenu à partir de la polycondensation d'un motif XY est constitué d'un polyamide XY dont la diamine (X) est en C₆ à C₁₀.

En particulier, la diamine (X) est choisie parmi l'hexaméthylène diamine et la décanediamine.

Avantageusement, ledit au moins MXDZ est constitué de 0% à 49% en poids de MXD6 et 51 à 100% en poids de MXD10 et ledit polyamide aliphatique A obtenu à partir de la polycondensation d'un motif XY est constitué de 0 à 49% en poids de PA610 et de 51 à 100% en poids de PA1010.

Avantageusement, MXDZ est constitué de MXD10 et ledit polyamide aliphatique A obtenu à partir de la polycondensation d'un motif XY est constitué de 0 à 49% en poids de PA610 et de 51 à 100% en poids de PA1010.

Avantageusement, MXDZ est constitué de MXD10 et ledit polyamide aliphatique A obtenu à partir de la polycondensation d'un motif XY est constitué de PA1010.

Avantageusement, ledit au moins MXDZ est constitué de 0% à 49% en poids de MXD6 et 51 à 100% en poids de MXD10 et ledit polyamide aliphatique A obtenu à partir de la polycondensation d'un motif XY est constitué de 0 à 49% en poids de PA1010 et de 51 à 100% en poids de PA610.

Avantageusement, MXDZ est constitué de MXD10 et ledit polyamide aliphatique A obtenu à partir de la polycondensation d'un motif XY est constitué de 0 à 49% en poids de PA1010 et de 51 à 100% en poids de PA610.

Avantageusement, MXDZ est constitué de MXD10 et ledit polyamide aliphatique A obtenu à partir de la polycondensation d'un motif XY est constitué de PA610.

Avantageusement, ledit polyamide aliphatique A est obtenu à partir de la polycondensation d'un lactame ou d'un aminoacide, en particulier du lauryllactame ou de l'acide 11-aminoundécanoïque.

Avantageusement, MXDZ est constitué de MXD10 et ledit polyamide aliphatique A est obtenu à partir de la polycondensation de lauryllactame.

Avantageusement, MXDZ est constitué de MXD10 et ledit polyamide aliphatique A est obtenu à partir de la polycondensation de l'acide 11-aminoundécanoïque.

Dans un mode de réalisation avantageux, ledit au moins un additif de ladite composition constituée par l'utilisation dudit au moins un polyamide MXDZ avec ledit mélange est choisi parmi les charges, les colorants, les stabilisants, les plastifiants, les agents tensioactifs, les agents nucléants, les pigments, les azurants, les antioxydants, les lubrifiants, les ignifugeants, les cires naturelles et leurs mélanges.

Dans un mode de réalisation avantageux, ledit au moins un additif de ladite composition constituée par l'utilisation dudit au moins un polyamide MXDZ avec ledit mélange est choisi parmi les charges, les colorants, les stabilisants, les plastifiants, les agents tensioactifs, les agents nucléants, les pigments, les azurants, les antioxydants, les lubrifiants, les cires naturelles et leurs mélanges.

Dans un mode de réalisation avantageux, ladite composition constituée par l'utilisation dudit au moins un polyamide MXDZ avec ledit mélange comprend :
- de 5 à 30% en poids, en particulier de 5 à 20% en poids, d'un polyamide MXD10, obtenu à partir de la polycondensation de la meta-xylylène diamine (MXD) ou un mélange de méta-xylylène diamine et de para-xylylène diamine, avec l'acide sébacique,
- de 20 à 60% en poids, en particulier de 25 à 50% de PA1010 obtenu à partir de la polycondensation de la décanediamine et de l'acide sébacique,
- de 30 à 75% en poids, en particulier de 40 à 65% en poids de fibres de verre à section circulaire,
- de 0 à 10% en poids d'au moins un modifiant choc,
- de 0 à 2% en poids d'au moins un additif.

Dans un mode de réalisation avantageux, ladite composition constituée par l'utilisation dudit au moins un polyamide MXDZ avec ledit mélange comprend :
- de 5 à 30% en poids, en particulier de 5 à 20% en poids, d'un polyamide MXD10, obtenu à partir de la polycondensation de la meta-xylylène diamine (MXD) ou un mélange de métaxylylène diamine et de para-xylylène diamine, avec l'acide sébacique,
- de 20 à 60% en poids, en particulier de 25 à 50% de PA610 obtenu à partir de la polycondensation de l'hexaméthylène diamine et de l'acide sébacique,
- de 30 à 75% en poids, en particulier de 40 à 65% en poids de fibres de verre à section circulaire,
- de 0 à 10% en poids d'au moins un modifiant choc,
- de 0 à 2% en poids d'au moins un additif.

Avantageusement, le MXDZ des compositions 1 à 8 ci-dessus définie est le MXD10 et le polyamide aliphatique A est le PA1010.

Avantageusement, le MXDZ des compositions 1 à 8 ci-dessus définie est le MXD10 et le polyamide aliphatique A est le PA610.

Avantageusement, le MXDZ des compositions 1 à 8 ci-dessus définie est le MXD10 et le polyamide aliphatique A est le PA1012.

Avantageusement, le MXDZ des compositions 1 à 8 ci-dessus définie est le MXD10 et le polyamide aliphatique A est le PA12.

Avantageusement, le MXDZ des compositions 1 à 8 ci-dessus définie est le MXD10 et le polyamide aliphatique A est le PA11.

Selon, un autre aspect, il est décrit une composition pour une mise en oeuvre, en particulier par injection ou moulage par compression telle que ci-dessus définie, comprenant :
- de 5 à 30% en poids, en particulier de 5 à 20% en poids, d'au moins un polyamide MXDZ, obtenu à partir de la polycondensation de la meta-xylylène diamine (MXD) ou un mélange de méta-xylylène diamine et de para-xylylène diamine, avec un diacide (Z) en C₆ à C₁₈, notamment en C₇ à C₁₈ en particulier en C₆ à C₁₂, plus particulièrement en C₇ à C₁₂.
- de 20 à 60% en poids, en particulier de 25 à 50% en poids d'au moins un polyamide aliphatique A obtenu à partir de la polycondensation d'un motif choisi parmi un lactame en C₆ à C₁₂, un aminoacide en C₆ à C₁₂ et un motif XY obtenu à partir de la polycondensation d'une diamine aliphatique (X) en C₄ à C₁₈, en particulier en C₄ à C₁₂ et un acide dicarboxylique aliphatique (Y) en C₆ à C₁₈, en particulier en C₆ à C₁₂,
- de 30 à 75% en poids, en particulier de 40 à 65% en poids de fibres de verre à section circulaire,
- de 0 à 10% en poids d'au moins un modifiant choc,
- de 0 à 2% en poids d'au moins un additif.

La somme des proportions de chaque constituant de la composition étant égale à 100%.

Toutes les caractéristiques techniques et mode de réalisation ci-dessus détaillés pour l'utilisation d'au moins un MXDZ dans un mélange comprenant au moins un polyamide aliphatique A pour constituer une composition sont valables pour la composition en tant que telle.

Avantageusement, ledit au moins un polyamide MXDZ de ladite composition ci-dessus définie comprend du MXD10.

Avantageusement, ledit polyamide MXDZ de ladite composition ci-dessus définie est constitué de MXD10.

Avantageusement, ledit diacide carboxylique (Y) dudit polyamide aliphatique A obtenu à partir de la polycondensation d'un motif XY correspond à l'acide sébacique. Avantageusement, ladite diamine (X) dudit polyamide aliphatique A obtenu à partir de la polycondensation d'un motif XY correspond à une diamine en C₆ à C₁₀, en particulier (X) est choisi parmi l'hexaméthylène diamine et la décanediamine.

Avantageusement, ledit polyamide aliphatique A obtenu à partir de la polycondensation d'un motif choisi parmi un lactame en C₆ à C₁₂ est le lauryllactame.

Avantageusement, ledit polyamide aliphatique A obtenu à partir de la polycondensation d'un motif choisi parmi un aminoacide en C₆ à C₁₂ est l'aminoundécanoïque acide. Avantageusement, ledit additif de ladite composition ci-dessus définie est choisi parmi les charges, les colorants, les stabilisants, les plastifiants, les agents tensioactifs, les agents nucléants, les pigments, les azurants, les antioxydants, les lubrifiants, les ignifugeants, les cires naturelles et leurs mélanges.

Avantageusement, ledit additif de ladite composition ci-dessus définie est choisi parmi les charges, les colorants, les stabilisants, les plastifiants, les agents tensioactifs, les agents nucléants, les pigments, les azurants, les antioxydants, les lubrifiants, les cires naturelles et leurs mélanges.

Selon un autre aspect, il est décrit l'utilisation d'une composition ci-dessus définie pour constituer une structure monocouche ou au moins une couche d'une structure multicouche.

Avantageusement, ladite structure se présente sous la forme d'une pièce injectée. Selon un autre aspect, il est décrit un objet obtenu à partir d'une composition ci-dessus définie.

Selon un autre aspect, il est décrit un procédé de mise en forme d'un objet tel que ci-dessus défini, caractérisé en ce qu'il comprend une étape de moulage par compression.

Selon un autre aspect, il est décrit l'utilisation d'un objet, tel que ci-dessus défini, dans le domaine électrique et/ou de l'électronique.

### DESCRIPTION DES FIGURES

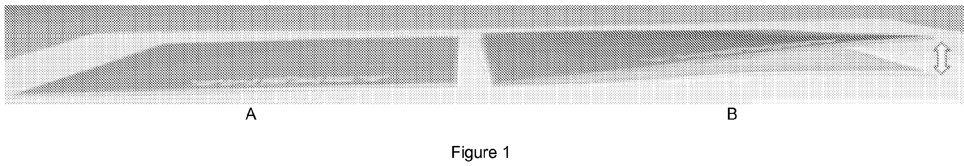

La figure 1 (A et B) présente le gauchissement obtenu avec 2 plaques injectées (100 × 100 × 1mm³) par :
A composition I1 ou I2 utilisée selon l'invention,
B composition C1 ou C4,
et mesuré tel que décrit dans l'exemple 1.
A : plaque injectée I1 ou I2 dont le gauchissement est limité et inférieur à 1 mm,
B : plaque injectée C1 ou C4 dont le gauchissement est très important et supérieur à 5 mm.

### EXEMPLES

### Exemple 1 : Evaluation du gauchissement de compositions de polyamides à base de PA610 ou PA1010, MXD10 et de fibres de verre à section circulaire ou à section plate.

### Synthèse

Le PA610, PA1010 et le MXD10 ont été préparés séparément et respectivement par polycondensation d'hexaméthylène diamine et d'acide sébacique, de décanediamine et d'acide sébacique et de meta-xylylène diamine et d'acide sébacique selon les techniques bien connues de l'homme du métier.

### Compoundage

Les compositions ont été préparées par mélange à l'état fondu des granules de polymères. Ce mélange a été effectué par compoundage sur extrudeuse bi-vis corotative type MC26 avec un profil de T plat à 270°C. La vitesse de vis est de 250rpm. L'introduction des fibres de verre à section circulaire ou à section plate est effectuée en gavage latéral.

### Injection

Des plaques de 100*100*1 mm³ ont été préparées par injection des différentes compositions :
- Température d'injection (alimentation/buse) : 250/270°C et 270/300°C
- Température du moule : 65°C et 90°C et 100°C
- Temps de maintien : 10 secondes
- Temps de refroidissement : 20 et 30 secondes
et le gauchissement a été évalué selon la méthode décrite ci-dessous :
Les plaques injectées sont posées sur une table. L'opérateur appuie sur 3 angles de la plaque pour faire remonter le quatrième. On mesure alors l'écart entre la surface de la table et l'échantillon, voir la flèche de la figure 1. Sur l'échantillon de gauche sur la figure 1 (A), le gauchissement est limité, c'est-à-dire inférieur à 1mm.

Les résultats sont présentés sur le tableau 1 suivant :

**TABLEAU 1**

| Composition | MXDZ (% en poids) | PAXY (% en poids) | Fibres verre à section circulaire (% en poids) Nittobo CSX3J451S0 | Fibres verre à section plate (% en poids) Nittobo CSG3PA820S | Gauchissement |
|---|---|---|---|---|---|
| C1 | - | PA610 50% | 50% | - | Très important >5mm* |
| C2 | - | PA610 50% | - | 50% | <1mm |
| I1 | MXD10 (15%) | PA610 35% | 50% | - | <1mm |
| C4 | - | PA1010 45% | 55% | - | Très important >5mm* |
| C5 | - | PA1010 45% | - | 55% | <1mm |
| I2 | MXD10 15% | PA1010 30% | 55% | - | <1mm |

| | | | | | |
|---|---|---|---|---|---|
| * Le gauchissement est très important quelles que soient les conditions d'injection (différentes T, différentes T de moule, température de refroidissement...) C : Composition comparative I : Composition de l'invention | | | | | |

Le tableau 1 montre que l'introduction de fibres verre à section circulaire dans un polyamide XY aliphatique induit un gauchissement important qui est pratiquement supprimé par introduction de MXDZ et ce même pour une proportion aussi importante que 50% ou 55% en poids de fibres de verre à section circulaire.

On atteint donc les mêmes performances en termes de gauchissement avec les compositions de l'invention comparé à des compositions avec fibres plates.

### Exemple 2 : Propriétés mécaniques

L'allongement à la rupture des compositions C2, C3 et I1 a été déterminé selon la norme ISO 527.

La machine mécanique est un INSTRON 5966. La vitesse de la traverse est de 1mm/min. Les conditions de test sont 23°C, 50% HR. Les échantillons de géométrie ISO 527 1A ont été au préalable conditionnés 2 semaines à 23°C, 50% HR. La déformation est mesurée par un extensomètre à contact.

La composition C3 correspond à PA610 (35% en poids), fibres verre à section plate (Nittobo CSG3PA820S, 50% en poids) et MXD10 (15% en poids).

Les résultats sont présentés dans le tableau 2 (essai sur cinq échantillons) :

**TABLEAU 2**

| Composition | Elongation à la rupture | |
|---|---|---|
| | % | écart type |
| C2 | 2,7 | 0,08 |
| C3 | 2,6 | 0,07 |
| I1 | 3,6 | 0,09 |

Le tableau 2 montre que la composition de l'invention présente un pourcentage d'élongation à la rupture augmenté de 30% par rapport à la même composition avec des fibres de verre à section plate au lieu de fibres de verre à section circulaire ou à une composition constituée de PA610 et fibres de verre à section plate.

## Revendications

1. Utilisation d'au moins un polyamide MXDZ, obtenu à partir de la polycondensation de la meta-xylylène diamine (MXD), avec un acide dicarboxylique aliphatique (Z) en C₆ à C₁₈, en particulier en C₆ à C₁₂, et comprenant du MXD10 dans un mélange comprenant au moins un polyamide aliphatique A obtenu à partir de la polycondensation d'un motif choisi parmi :
- un lactame en C₆ à C₁₂,
- un aminoacide en C₆ à C₁₂, et
- un motif XY obtenu à partir de la polycondensation d'une diamine aliphatique (X) en C4 à C18, en particulier en C4 à C12 et un acide dicarboxylique aliphatique (Y) en C₆ à C₁₈, en particulier en C₆ à C₁₂,
la dite composition étant dépourvue de PA66,
des fibres de verre à section circulaire et optionnellement au moins un modifiant choc et/ou au moins un additif,
ledit au moins un polyamide MXDZ et ledit mélange constituant une composition, et le rapport en poids MXDZ/A étant compris de 0,11 à 0,83, en particulier de 0,11 à 0,66, pour limiter le gauchissement de ladite composition lors de sa mise en oeuvre, en particulier par injection ou moulage par compression.

2. Utilisation selon la revendication 1, **caractérisée en ce que** la proportion dudit au moins un polyamide MXDZ est comprise de 5 à 30% en poids, en particulier de 5 à 20% par rapport à la somme des constituants de ladite composition.

3. Utilisation selon la revendication 1 ou 2, **caractérisée en ce que** ladite composition comprend :
- de 5 à 30% en poids, en particulier de 5 à 20% en poids, dudit au moins un MXDZ,
- de 20 à 60% en poids, en particulier de 25 à 50% dudit au moins un polyamide aliphatique A,
- de 30 à 75% en poids, en particulier de 40 à 65% en poids de fibres de verre à section circulaire,
- de 0 à 10% en poids d'au moins un modifiant choc,
- de 0 à 2% en poids d'au moins un additif.
La somme des proportions de chaque constituant de la composition étant égale à 100%.

4. Utilisation selon l'une des revendications 1 à 3, **caractérisée en ce que** ledit MXDZ est constitué de MXD10.

5. Utilisation selon l'une des revendications 1 à 4, **caractérisée en ce que** le polyamide aliphatique A est obtenu à partir de la polycondensation d'un motif XY, et (Y) correspond à l'acide sébacique.

6. Utilisation selon l'une des revendications 1 à 5, **caractérisée en ce que** le polyamide aliphatique A est obtenu à partir de la polycondensation d'un motif XY, et (X) correspond à une diamine en C₆ à C₁₀.

7. Utilisation selon l'une des revendications 1 à 6, **caractérisée en ce que** le polyamide aliphatique A est obtenu à partir de la polycondensation d'un motif XY, et (X) est choisi parmi l'hexaméthylène diamine et la décanediamine.

8. Utilisation selon l'une des revendications 1 à 4, **caractérisé en ce que** le polyamide aliphatique A est obtenu à partir de la polycondensation d'un lactame ou d'un aminoacide, en particulier du lauryllactame ou de l'acide aminoundécanoïque.

9. Utilisation selon l'une des revendications 1 à 8, **caractérisée en ce que** ledit au moins un additif est choisi parmi les charges, les colorants, les stabilisants, les plastifiants, les agents tensioactifs, les agents nucléants, les pigments, les azurants, les antioxydants, les lubrifiants, les ignifugeants, les cires naturelles et leurs mélanges.

## Patentansprüche

1. Verwendung mindestens eines MXDZ-Polyamids, das durch Polykondensation von meta-Xylylendiamin (MXD) mit einer aliphatischen C₆- bis C₁₈-, insbesondere C₆- bis C₁₂-Dicarbonsäure (Z) erhalten wird und MXD10 in einer Mischung umfasst, die mindestens ein aliphatisches Polyamid A umfasst, das durch Polykondensation einer Einheit erhalten wird, die ausgewählt ist aus:
- einem C₆- bis C₁₂-Lactam,
- einer C₆- bis C₁₂-Aminosäure, und
- einer Einheit XY, die durch Polykondensation eines aliphatischen C₄- bis C₁₈-, insbesondere C₄- bis C₁₂-Diamins (X) und einer aliphatischen C₆- bis C₁₈-, insbesondere C₆- bis C₁₂-Dicarbonsäure (Y) erhalten wird, wobei die Zusammensetzung frei von PA66 ist,
Glasfasern mit kreisförmigem Querschnitt und optional mindestens einen Schlagzäh-Modifikator und/oder mindestens ein Additiv,
wobei das mindestens eine MXDZ-Polyamid und die Mischung eine Zusammensetzung bilden und wobei das Gewichtsverhältnis MXDZ/A 0,11 bis 0,83, insbesondere 0,11 bis 0,66 beträgt, um das Verziehen der Zusammensetzung bei ihrer Verarbeitung, insbesondere durch Spritzgießen oder Formpressen, zu begrenzen.

2. Verwendung nach Anspruch 1, **dadurch gekennzeichnet, dass** der Anteil des mindestens einen MXDZ-Polyamids 5 bis 30 Gew.-%, insbesondere 5 bis 20 Gew.-% bezogen auf die Summe der Bestandteile der Zusammensetzung beträgt.

3. Verwendung nach Anspruch 1 oder 2, **dadurch gekennzeichnet, dass** die Zusammensetzung umfasst:
- 5 bis 30 Gew.-%, insbesondere 5 bis 20 Gew.-% des mindestens einen MXDZ,
- 20 bis 60 Gew.-%, insbesondere 25 bis 50 Gew.-% des mindestens einen aliphatischen Polyamids A,
- 30 bis 75 Gew.-%, insbesondere 40 bis 65 Gew.-% Glasfasern mit kreisförmigem Querschnitt,
- 0 bis 10 Gew.-% mindestens eines Schlagzäh-Modifikators,
- 0 bis 2 Gew.-% mindestens eines Additivs,
wobei die Summe der Anteile jedes Bestandteils der Zusammensetzung 100 % beträgt.

4. Verwendung nach einem der Ansprüche 1 bis 3, **dadurch gekennzeichnet, dass** das MXDZ aus MXD10 besteht.

5. Verwendung nach einem der Ansprüche 1 bis 4, **dadurch gekennzeichnet, dass** das aliphatische Polyamid A durch Polykondensation einer Einheit XY erhalten wird und (Y) der Sebazinsäure entspricht.

6. Verwendung nach einem der Ansprüche 1 bis 5, **dadurch gekennzeichnet, dass** das aliphatische Polyamid A durch Polykondensation einer Einheit XY erhalten wird und (X) einem C₆- bis C₁₀-Diamin entspricht.

7. Verwendung nach einem der Ansprüche 1 bis 6, **dadurch gekennzeichnet, dass** das aliphatische Polyamid A durch Polykondensation einer Einheit XY erhalten wird und (X) aus Hexamethylendiamin und Decandiamin ausgewählt ist.

8. Verwendung nach einem der Ansprüche 1 bis 4, **dadurch gekennzeichnet, dass** das aliphatische Polyamid A durch Polykondensation eines Lactams oder einer Aminosäure, insbesondere des Laurinlactams oder der Aminoundecansäure erhalten wird.

9. Verwendung nach einem der Ansprüche 1 bis 8, **dadurch gekennzeichnet, dass** das mindestens eine Additiv aus den Füllstoffen, den Farbstoffen, den Stabilisatoren, den Weichmachern, den grenzflächenaktiven Stoffen, den Nukleierungsmitteln, den Pigmenten, den Aufhellern, den Antioxidantien, den Schmiermitteln, den Flammschutzmitteln, den natürlichen Wachsen und ihren Mischungen ausgewählt ist.

## Claims

1. Use of at least one polyamide MXDZ, obtained from the polycondensation of meta-xylylenediamine (MXD) with a C₆ to C₁₈, in particular C₆ to C₁₂, aliphatic dicarboxylic acid (Z) and comprising MXD10 in a mixture comprising at least one aliphatic polyamide A obtained from the polycondensation of a unit chosen from:
- a C₆ to C₁₂ lactam,
- a C₆ to C₁₂ amino acid, and
- a unit XY obtained from the polycondensation of a C₄ to C₁₈, in particular C₄ to C₁₂, aliphatic diamine (X) and a C₆ to C₁₈, in particular C₆ to C₁₂, aliphatic dicarboxylic acid (Y),
said composition being devoid of PA66,
glass fibres having a circular section and optionally at least one impact modifier and/or at least one additive, said at least one polyamide MXDZ and said mixture constituting a composition, and the MXDZ/A ratio by weight being from 0.11 to 0.83, in particular from 0.11 to 0.66,
for limiting the warping of said composition during its processing, in particular by injection moulding or by compression moulding.

2. Use according to Claim 1, **characterized in that** the proportion of said at least one polyamide MXDZ is from 5% to 30% by weight, in particular from 5% to 20% by weight, with respect to the sum of the constituents of said composition.

3. Use according to Claim 1 or 2, **characterized in that** said composition comprises:
- from 5% to 30% by weight, in particular from 5% to 20% by weight, of said at least one MXDZ,
- from 20% to 60% by weight, in particular from 25% to 50% by weight, of said at least one aliphatic polyamide A,
- from 30% to 75% by weight, in particular from 40% to 65% by weight, of glass fibres having a circular section,
- from 0% to 10% by weight of at least one impact modifier,
- from 0% to 2% by weight of at least one additive, the sum of the proportions of each constituent of the composition being equal to 100%.

4. Use according to one of Claims 1 to 3, **characterized in that** said MXDZ consists of MXD10.

5. Use according to one of Claims 1 to 4, **characterized in that** the aliphatic polyamide A is obtained from the polycondensation of a unit XY, and Y corresponds to sebacic acid.

6. Use according to one of Claims 1 to 5, **characterized in that** the aliphatic polyamide A is obtained from the polycondensation of a unit XY, and X corresponds to a C₆ to C₁₀ diamine.

7. Use according to one of Claims 1 to 6, **characterized in that** the aliphatic polyamide A is obtained from the polycondensation of a unit XY, and X is chosen from hexamethylenediamine and decanediamine.

8. Use according to one of Claims 1 to 4, **characterized in that** the aliphatic polyamide A is obtained from the polycondensation of a lactam or of an amino acid, in particular lauryllactam or aminoundecanoic acid.

9. Use according to one of Claims 1 to 8, **characterized in that** said at least one additive is chosen from fillers, dyes, stabilizers, plasticizers, surface-active agents, nucleating agents, pigments, brighteners, antioxidants, lubricants, flame retardants, natural waxes and their mixtures.
